# EUROPÄISCHE PATENTANMELDUNG

(11) **EP 4 588 342 A1**
(43) Veröffentlichungstag der Anmeldung: **23.07.2025**
(21) Anmeldenummer: 25152465.8
(22) Anmeldetag: 17.01.2025
(51) Int. Cl.: A01K 1/035, A47C 27/00, A47C 27/08

(54) **ISOMATTE FÜR TIERE**

(30) Priorität: 17.01.2024 DE 202024100207 U
(71) Anmelder: Manuly GmbH, 22297 Hamburg (DE)
(72) Erfinder: Ruhle, Clemens, 22297 Hamburg (DE); Schopf, Niclas, 22297 Hamburg (DE)
(74) Vertreter: RGTH

(57) **Zusammenfassung**

Es wird ein Isomatte (10) für Tiere vorgeschlagen, die einen Füllkörper (11) und eine Hülle (20) umfasst, wobei die Hülle (20) derart ausgebildet ist, dass die Hülle (20) den Füllkörper (11) lösbar umschließen kann.

## Beschreibung

Die vorliegende Erfindung betrifft eine Isomatte für Tiere nach Anspruch 1.

Isomatten für Tiere sind grundsätzlich bekannt. Deren Zweck ist vor allem eine Unterlage für ein Tier bereit zu stellen, welche dem Tier Komfort und thermische Isolation bietet. Allerdings sind die bekannten Isomatten nicht waschbar und somit für die Verwendung für ein Tier äußerst unpraktikabel. Auch sind diese schwer oder unhandlich zu transportieren.

Der vorliegenden Erfindung liegt die Aufgabe zugrunde, eine Isomatte für Tiere zu entwickeln, welche mobil sowie waschbar ist und einen Komfort bietet, um in möglichst vielseitigen Situationen Anwendung zu finden.

Gelöst wird die vorgenannte Aufgabe durch eine Isomatte für Tiere, die einen Füllkörper und eine Hülle umfasst. Die Hülle kann dabei den Füllkörper lösbar umschließen. In anderen Worten kann die Hülle vor allem den Füllkörper vollkommen umschließen, wobei diese wieder gelöst werden kann, um eine Waschbarkeit zu erreichen. Dabei besteht die Hülle insbesondere aus einem waschbaren Material. Bei dem Tier handelt es sich vorzugsweise um einen Hund.

Der Füllkörper an sich kann aufblasbar sein. Hierzu kann der Füllkörper vor allem mindestens ein, vorzugsweise genau ein, Ventil umfassen. Vorzugsweise ist der Füllkörper selbstaufblasbar. Beispielsweise kann der Füllkörper ein thermoplastisches Polyurethan umfassen. Ferner kann recyceltes Polyethylenterephthalat eingesetzt werden, das besonders widerstandsfähig ist.

Insbesondere kann es sich bei dem Füllkörper um eine Polyurethanschaum-Matte handeln, die beispielsweise von einer luftdichten Umhüllung umgeben sein kann, die ein oder mehrere verschließbare Ventile aufweisen kann.

Insbesondere kann der Füllkörper im nicht genutzten Zustand zusammengerollt werden. Dabei kann der Schaumstoff einer Polyurethanschaum-Matte zusammengedrückt werden, um die Isomatte in einem möglichst kleinen Volumen zusammenzufassen und die mobile Anwendbarkeit zu ermöglichen. Durch Verschließen des Ventils, bleibt die luftdichte Umhüllung verschlossen, so dass die Polyurethanschaum-Matte möglichst wenig Platz einnimmt. Um die Matte wieder zu entrollen, wird das Ventil geöffnet, damit Luft in die Polyurethanschaum-Matte strömen kann. Danach nimmt der elastische Schaumstoff seine ursprüngliche Form wieder ein. Dabei kann Luft in den Schaumstoff eingesaugt werden, die darin verbleibt, wenn ein entsprechendes Ventil verschlossen wird. Zusätzlich kann die Isomatte weiter aufgeblasen werden, ebenfalls über das Ventil.

Insbesondere besteht die Hülle aus einem schmutzabweisenden Material, vor allem einem textilen Gewebe. Der Füllkörper kann insbesondere eine quaderförmige Grundform aufweisen, wobei die Eckbereiche abgerundet sein können. Vor allem kann das Ventil in einem Randbereich des Füllkörpers angeordnet sein. Insbesondere kann das Ventil in einem Eckbereich angeordnet sein.

Es können die Dimensionen, vor allem die Höhe und/oder Breite und/oder Länge, des Füllkörpers und die Dimensionen, vor allem die Höhe und/oder Breite und/oder Länge, der Hülle derart aufeinander abgestimmt sein, dass der Füllkörper passgenau in die Hülle passt. Dabei kann beispielsweise das Ventil aus der Hülle hervorragen oder in der Hülle eingefasst sein. Die erste Variante ermöglicht beispielsweise ein Nachfüllen von Luft, auch wenn der Füllkörper bereits in der Hülle angeordnet ist.

Der Füllkörper kann vor allem eine Dicke zwischen 1 cm und 7 cm, vorzugsweise zwischen 2 cm und 5 cm, aufweisen. Vor allem kann die Hülle einen Verschluss, vor allem einen Reißverschluss, umfassen, der sich um mindestens eine Längsseite der Hülle erstreckt. Vorzugsweise erstreckt sich der Verschluss um eine gesamte Längsseite der Hülle und um die sich an die Seite anschließenden zwei Eckbereiche, die, wie oben beschrieben, abgerundet sein können. Der Füllkörper kann somit entlang der Längsseite in die Hülle eingeschoben werden. Dadurch, dass sich der Verschluss auch um zwei Eckbereiche erstrecken kann, ist es besonders einfach, den Füllkörper in die Hülle einzubringen.

Die Hülle kann an einer Oberseite und/oder einer Unterseite mindestens zweilagig, vorzugsweise genau zweilagig, ausgebildet sein. Die Oberseite dient vor allem als Auflagefläche für das Tier, während die Unterseite als Auflagefläche auf einem Untergrund dient.

Vorzugsweise ist die Hülle an der Oberseite zweilagig ausgebildet, während sie an der Unterseite einlagig ausgebildet sein kann. Eine Lage der Hülle kann wasserabweisend ausgebildet sein. Dabei kann es sich insbesondere um eine Lage der Oberseite der Hülle handeln um zu verhindern, dass Feuchtigkeit von dem Tier in Richtung Füllkörper dringen kann. Insbesondere kann eine innere Lage der Hülle an der Oberseite wasserabweisend sein. Bei der äußeren Lage der Hülle kann es sich insbesondere um einen Langhaarstoff oder einen Teddystoff handeln, hier kann auch ein Vlies oder ein Baumwollstoff eingesetzt werden, um dem Tier einen möglichst großen Komfort zu bieten. Der Langhaarstoff und/oder der Teddystoff weist vor allem Fasern auf, die mindestens 0,5 cm, vorzugsweise mindestens 1 cm, am meisten bevorzugt mindestens 2 cm, lang sind. Auch kann eine Lage der Hülle der Unterseite wasserabweisend sein, um beispielsweise zu verhindern, dass Feuchtigkeit von dem Untergrund in Richtung Füllkörper dringen kann. Eine Lage der Hülle kann insbesondere einen textilen Stoff umfassen. Insbesondere ist die gesamte Hülle aus textilem Stoff gebildet.

Eine Lage der Hülle kann eine kühlende Eigenschaft aufweisen. Beispielsweise kann eine Lage der Hülle ein kältespeicherndes Material umfassen, um Kälte Richtung Tier abgeben zu können. Das kältespeichernde Material kann beispielsweise ein Gel sein. Ferner kann eine Lage der Hülle wärmeabtransportierende Fasern umfassen, die Wärme besonders gut ableiten. Die Fasern können beispielsweise Seide, Leinen oder Baumwolle umfassen. Ferner kann beispielsweise eine Lage der Hülle aus einer Polyethylenfolie, beispielsweise einer nanoporösen Polyethylenfolie bestehen, die ebenfalls besonders kühlende Eigenschaften ausbilden kann.

Ferner kann der Füllkörper und/oder die Hülle ein Heizelement umfassen. Dieses kann beispielsweise an einer Oberseite der Hülle, beispielsweise in einer Lage an der Oberseite der Hülle, eingearbeitet sein. Das Heizelement kann beispielsweise durch einen Akku oder eine Batterie angetrieben werden und aktiv Wärme in Richtung Tier abgeben. Es können aber auch Stoffe mit besonders wärmenden Eigenschaften, wie bspw. Wolle, verwenden werden. Dies bedeutet, dass keine zusätzliche Technik verbaut sein muss, um die Hülle besonders wärmespendet zu machen.

Die Hülle kann an einer Unterseite, beispielsweise an einer Lage, vor allem einer äußeren Lage, der Unterseite, rutschhemmende Elemente umfassen. Die rutschhemmenden Elemente können beispielsweise aus Polyvinylchlorid hergestellt sein. Die rutschhemmenden Elemente dienen dazu, ein Rutschen der Isomatte auf einer glatten Oberfläche, beispielsweise Holz und Fliesen, zu reduzieren beziehungsweise zu unterbinden, um dem Tier einen großen Komfort und Sicherheit zu bieten. Die rutschhemmenden Elemente können beispielsweise als Punkte oder als Hundepfoten, Hundeknochen, Herzen oder ähnlichem ausgebildet sein.

Die Isomatte dient insbesondere dazu eine thermische Isolation gegenüber dem Untergrund, vor allem gegen Nässe und Kälte, zu gewährleisten und gleichzeitig den Komfort im Vergleich beispielsweise zu Decken, die für ein Tier auf einem Boden ausgebreitet werden können, wesentlich zu erhöhen. Dabei wird ferner die flexible Anwendbarkeit gewährleistet durch die Tatsache, dass die Isomatte mobil eingesetzt werden kann.

Ferner kann die Isomatte mindestens ein Fixierelement, vor allem ein Band, am meisten bevorzugt mindestens ein Gummiband, umfassen, um diese im zusammengerollten Zustand zu fixieren. Ferner kann die Isomatte eine Transporttasche, wie beispielsweise einen Turnbeutel, umfassen, in den die Isomatte passgenau im zusammengerollten Zustand eingebracht werden kann. Dieses Transportmittel kann ebenfalls aus Polyurethanmaterial gebildet sein.

Die Nähte, mit denen die Hülle zusammengenäht sind, können innenliegend sein und/oder mit Stoff umnäht beziehungsweise ummantelt sein, um einen möglichst großen Komfort zu gewährleisten.

Insbesondere beträgt eine Längsausdehnung der Isomatte zwischen 40 cm und 120 cm, vorzugsweise zwischen 60 cm und 100 cm. Die Breite kann insbesondere zwischen 20 cm und 90 cm, vorzugsweise zwischen 40 cm und 80 cm, liegen.

Es zeigen in rein schematischer Darstellung:
- Figur 1:: eine perspektivische Ansicht einer Isomatte;
- Figur 2:: eine perspektivische Ansicht eines Füllkörpers der Isomatte der Figur 1;
- Figur 3:: einen Querschnitt der Hülle 20 der Isomatte der Figur 1.

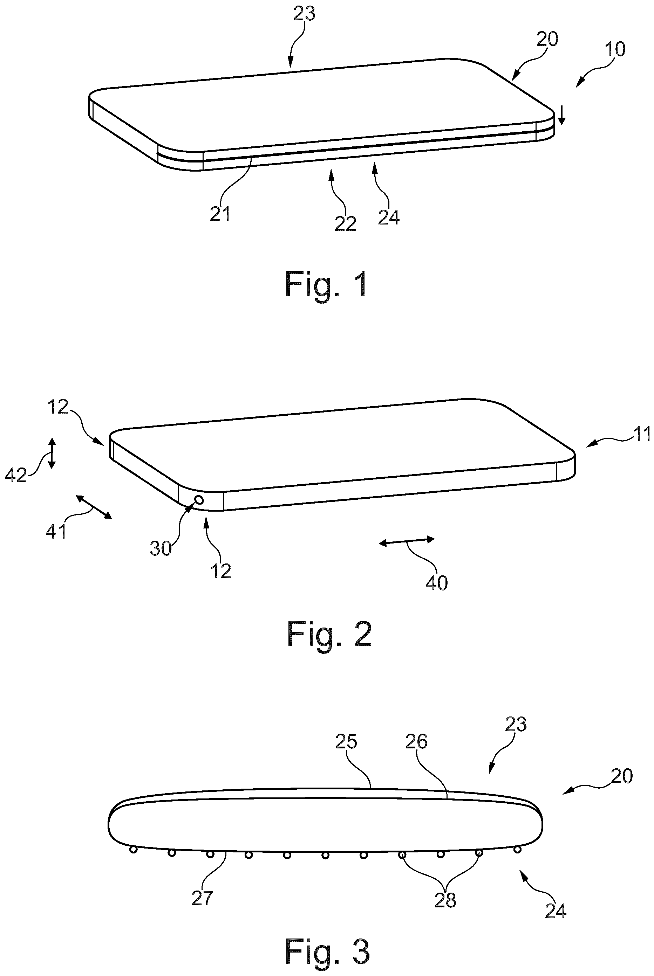

Figur 1 zeigt eine perspektivische Ansicht einer Isomatte 10, die einen Füllkörper 11 (in Figur 1 nicht zu sehen; siehe Figur 2) und eine Hülle 20 umfasst. Deutlich ist der Verschluss 21 der Hülle zu sehen, der sich entlang einer Längsseite 22 erstreckt. Ferner sind die Oberseite 23 und die Unterseite 24 der Hülle zu sehen.

In Figur 2 ist perspektivisch der Füllkörper 11 einer Isomatte 10 zu sehen. Deutlich ist zu sehen, wie sich die Füllkörper 11 in einer Dickenrichtung 42 erstreckt. Ferner ist eine Längsrichtung 40 und eine Breitenrichtung 41 zu sehen. Es handelt sich um einen aufblasbaren Füllkörper 11, der einen möglichst großen Komfort bieten kann. In einem Eckbereich 12 ist ein Ventil (30) zum Einlassen und Auslassen von Luft angeordnet.

In Figur 3 ist ein Querschnitt der Hülle 20 der Isomatte der Figur 1 zu sehen. Es sind somit die unterschiedlichen Lagen der Hülle an deren Oberseite 23 und deren Unterseite 24 zu sehen. An der Unterseite 24 weist die Hülle 20 eine Lage 27 auf, die wasserabweisend ausgebildet ist und rutschhemmende Elemente 28 aufweist, sodass die Isomatte 10 vor einem Verrutschen auf einer glatten Oberfläche gesichert ist.

An der Oberseite 23 sind zwei Lagen vorgesehen, eine äußere Lage 25 und eine innere Lage 26. Die innere Lage 26 kann wasserabweisend ausgebildet sein. Ferner kann die innere Lage 26 kühlend oder wärmend ausgebildet sein. Die äußere Lage 25 besteht aus einem textilen Stoff, und zwar auf einem Langhaar- oder Teddystoff. Die äußere Lage 25 kann ebenfalls kühlend oder wärmend ausgebildet sein.

### Bezugszeichenliste

- 10: Isomatte
- 11: Füllkörper
- 12: Eckbereich

- 20: Hülle
- 21: Verschluss
- 22: Längsseite
- 23: Oberseite
- 24: Unterseite
- 25: äußere Lage
- 26: innere Lage
- 27: Lage der Unterseite
- 28: rutschhemmende Elemente
- 30: Ventil

- 40: Längsrichtung
- 41: Breitenrichtung
- 42: Dickenrichtung

## Patentansprüche

1. Isomatte (10) für Tiere,
**dadurch gekennzeichnet, dass**
die Isomatte (10) einen Füllkörper (11) und eine Hülle (20) umfasst, wobei die Hülle (20) derart ausgebildet ist, dass die Hülle (20) den Füllkörper (11) lösbar umschließen kann.

2. Isomatte (10) nach Anspruch 1,
**dadurch gekennzeichnet, dass**
der Füllkörper (11) aufblasbar, vorzugsweise selbstaufblasbar, ist.

3. Isomatte (10) nach Anspruch 1 oder 2,
**dadurch gekennzeichnet, dass**
dass der Füllkörper (11) thermoplastisches Polyurethan umfasst.

4. Isomatte (10) nach einem der vorangehenden Ansprüche,
**dadurch gekennzeichnet, dass**
der Füllkörper (11) ein Ventil (30) zum Einlassen und Auslassen von Luft umfasst, wobei das Ventil (30) in einem Randbereich, vor allem einem Eckbereich, des Füllkörpers (11) angeordnet ist.

5. Isomatte (10) nach einem der vorangehenden Ansprüche,
**dadurch gekennzeichnet, dass**
die Dimensionen des Füllkörpers (11) und die Dimensionen der Hülle (20) derart aufeinander abgestimmt sind, dass der Füllkörper (22) passgenau in die Hülle (20) passt.

6. Isomatte (10) nach einem der vorangehenden Ansprüche,
**dadurch gekennzeichnet, dass**
der Füllkörper (11) eine Dicke zwischen 1 cm und 7 cm, vorzugsweise zwischen 2 cm und 6 cm, aufweist.

7. Isomatte (10) nach einem der vorangehenden Ansprüche,
**dadurch gekennzeichnet, dass**
die Hülle (20) einen Verschluss (21) umfasst, der sich um mindestens eine Längsseite (22) der Hülle (20) erstreckt.

8. Isomatte (10) nach einem der vorangehenden Ansprüche,
**dadurch gekennzeichnet, dass**
die Hülle (20) an einer Oberseite (23) und/oder an einer Unterseite (24) mindestens zweilagig ausgebildet ist.

9. Isomatte (10) nach einem der vorangehenden Ansprüche,
**dadurch gekennzeichnet, dass**
eine Lage der Hülle (20) wasserabweisend ist.

10. Isomatte (10) nach einem der vorangehenden Ansprüche,
**dadurch gekennzeichnet, dass**
eine Lage der Hülle (20) kühlend ausgebildet ist.

11. Isomatte (10) nach einem der vorangehenden Ansprüche,
**dadurch gekennzeichnet, dass**
die Hülle (20) und/oder die Hülle (20) ein Heizelement umfasst.

12. Isomatte (10) nach einem der vorangehenden Ansprüche,
**dadurch gekennzeichnet, dass**
die Hülle (20) an einer Unterseite (24) rutschhemmende Elemente (28) umfasst.

13. Isomatte (10) nach Anspruch 12,
**dadurch gekennzeichnet, dass**
die rutschhemmenden Elemente (28) Polyvinylchlorid umfassen.
